# EUROPÄISCHE PATENTANMELDUNG

(11) **EP 2 982 542 A1**
(43) Veröffentlichungstag der Anmeldung: **10.02.2016**
(21) Anmeldenummer: 15179987.1
(22) Anmeldetag: 06.08.2015
(51) Int. Cl.: B60R 9/06

(54) **FALTBARE BOX, VERWENDUNG EINER FALTBAREN BOX UND AGRARFAHRZEUG MIT EINER FALTBAREN BOX**

(30) Priorität: 06.08.2014 DE 102014215603
(71) Anmelder: Adolf Würth GmbH & Co. KG, 74653 Künzelsau (DE)
(72) Erfinder: Eckert, Rainer, 97990 Weikersheim (DE); Reuther, Herbert, 74238 Krautheim (DE)

(57) **Zusammenfassung**

Die Erfindung betrifft eine faltbare Box mit einem Boden, zwei Seitenwänden, einer Rückwand, einer Vorderwand (18) und einem Deckel, bei der die Rückwand eine Koppelvorrichtung zum lösbaren Verbinden mit einem Agrarfahrzeug aufweist und bei der der Boden, die Seitenwände und die Vorderwand im an das Agrarfahrzeug angekoppelten Zustand einklappbar und aufklappbar sind.

## Beschreibung

Die Erfindung betrifft eine faltbare Box mit einem Boden, zwei Seitenwänden, einer Rückwand und einer Vorderwand. Die Erfindung betrifft auch die Verwendung einer faltbaren Box sowie ein Agrarfahrzeug mit einer faltbaren Box.

Im Stand der Technik sind eine Reihe von Boxen bekannt: US20060266778, WO2006086830, US8419064, DE102005049340, EP2380804, EP2842808, GB411973. Aus der GB341309 ist ein faltbarer Kofferraum für Fahrzeuge bekannt. Aus der US20100236955 ist eine nicht klappbare Box für Agrarfahrzeuge bekannt.

Mit der Erfindung soll eine faltbare Box bereitgestellt werden, die in besonderer Weise für die Verwendung an einem Agrarfahrzeug geeignet ist.

Erfindungsgemäß ist hierzu eine faltbare Box mit einem Boden, zwei Seitenwänden, einer Rückwand und einer Vorderwand vorgesehen, bei der wenigstens eine Seitenwand, die Rückwand und/oder der Boden eine Koppelvorrichtung zum lösbaren Verbinden mit einem Agrarfahrzeug aufweist und bei der die Box und die Koppelvorrichtung in einer Weise ausgebildet und angeordnet sind, dass die Box in einem, an das Agrarfahrzeug angekoppelten Zustand zusammenfaltbar und auffaltbar ist.

Mit der Erfindung wird dadurch eine Box zum Aufbewahren oder zum Transport von Gegenständen geschaffen, die, wenn sie nicht benötigt wird, zusammengefaltet wird und dadurch auf dem Agrarfahrzeug nur sehr wenig Platz benötigt. Muss dahingehend beispielsweise Werkzeug, wie Motorsägen, Äxte, und dergleichen, mit dem Agrarfahrzeug transportiert werden, so wird die Box aufgefaltet und stellt dadurch einen sicheren Aufbewahrungsort bzw. einen Transportraum zur Verfügung. Indem die Koppelvorrichtung zum lösbaren Verbinden mit einem Agrarfahrzeug, beispielsweise mit einem Geräteträger eines Agrarfahrzeugs, ausgebildet ist, kann die Box in einfacher Weise auf- und abgenommen werden. Beispielsweise kann die Box in einer Werkstatt mit dem für den Tag benötigten Werkzeug bestückt werden und wird dann im gefüllten Zustand an das Agrarfahrzeug angekoppelt, um ohne Zeitverzögerung zum vorgesehenen Arbeitsort starten zu können. Die bestückte Werkzeugbox kann dabei beispielsweise über Nacht in einem verschließbaren Raum aufbewahrt werden und muss nicht am Fahrzeug selbst verbleiben. In gleicher Weise ist es möglich, die Box am vorgesehenen Arbeitsort vom Fahrzeug abzukoppeln, um dann beispielsweise am Arbeitsort andere Arbeiten mit dem Agrarfahrzeug ausführen zu können. Die Box selber kann abschließbar sein und am Arbeitsort verbleiben. Wird die Box, beispielsweise außerhalb der Saison, überhaupt nicht benötigt, so kann sie vom Agrarfahrzeug abgekoppelt, zusammengefaltet und im zusammengefalteten Zustand platzsparend verstaut werden. Die Box kann im zusammengefalteten und im aufgefalteten Zustand abschließbar sein. Die Box kann eine faltbare oder klappbare Inneneinteilung haben. Die Box kann wasserdicht ausgeführt sein, beispielsweise durch Vorsehen von Dichtlippen. Die Box kann aus Metall, beispielsweise lackiertes oder verzinktes Blech oder Edelstahl, oder aus Holz oder Kunststoff bestehen. Der Grundriss und damit der Boden der Box kann rechteckig, quadratisch oder auch trapezförmig sein. Die Seitenwände können zweiteilig, dreiteilig oder auch vierteilig sein, wobei die einzelnen Teilwände nicht gleich groß sein müssen, beispielsweise ein Drittel / zwei Drittel. Der Boden der Box kann geteilt sein, damit die Tiefe der Box auch größer als die Höhe der Box bzw. der Rückwand sein kann.

In Weiterbildung der Erfindung ist die Rückwand starr ausgebildet und die Koppelvorrichtung ist an der Rückwand angeordnet.

Das Vorsehen der Koppelvorrichtung an einer starren Rückwand hat sich als zur Verwendung mit einem Agrarfahrzeug vorteilhaft herausgestellt. An und für sich werden Boxen mit dem Boden abgestellt und stehen dann durch ihr Eigengewicht sowie das Gewicht der darin aufgenommenen Gegenstände sicher. Gerade dann, wenn sehr schwere Werkzeuge aufbewahrt oder transportiert werden müssten, hat sich aber die Anordnung der Koppelvorrichtung an der Rückwand als besonders vorteilhaft herausgestellt, da beispielsweise die Aufnahme mit einer Hubvorrichtung des Agrarfahrzeuges dann in einfacher Weise möglich ist. Dies gilt speziell für den Agrarbereich, in dem damit zu rechnen ist, dass die Box auf weichem Untergrund, beispielsweise Waldboden, abgestellt wird und es nicht mehr ohne weiteres möglich ist, mit einer Hubvorrichtung unter die Box zu kommen, um am Boden anzugreifen.

In Weiterbildung der Erfindung bestehen die beiden Seitenwände jeweils aus einer ersten und einer zweiten Teilwand, wobei die beiden Teilwände gleich groß sind und um eine zur Rückwand parallele erste Achse schwenkbar aneinander angelenkt sind, wobei die erste Teilwand um eine zu der ersten Achse parallele zweite Achse schwenkbar an der Rückwand angelenkt ist und wobei die zweite Teilwand um eine zu der ersten Achse parallele dritte Achse schwenkbar an der Vorderwand angelenkt ist.

Mittels solcher, klappbarer Seitenwände kann in Verbindung mit einer starren Rückwand ein sehr kleines Packmaß der zusammengefalteten Box bereitgestellt werden und gleichzeitig kann ein sehr stabiler und für den Agrarbereich geeigneter Aufbau der Box realisiert werden.

In Weiterbildung der Erfindung ist die Vorderwand starr ausgebildet.

Bei der erfindungsgemäßen faltbaren Box wird also die starre Vorderwand beim Einklappen der beiden Seitenwände auf die Rückwand zubewegt. Umgekehrt muss die Vorderwand einfach linear von der Rückwand weg bewegt werden, um die beiden Seitenwände aufzufalten.

In Weiterbildung der Erfindung ist der Boden starr ausgebildet und um eine vierte Achse, die senkrecht zu der ersten Achse und parallel zur Rückwand angeordnet ist, schwenkbar mit der Rückwand oder mit der Vorderwand verbunden.

Sobald die Seitenwände vollständig ausgeklappt sind, kann somit der Boden nach unten in seine endgültige Lage geschwenkt werden. Der Boden stabilisiert dadurch die Box und, da der Boden starr ausgebildet ist, ist er dafür geeignet, auch sehr schwere Werkzeuge oder Gerätschaften zu tragen. Im zusammengefalteten Zustand liegt der Boden dahingegen parallel zur Rückwand und nimmt nur wenig Raum in Anspruch.

In Weiterbildung der Erfindung ist ein Deckel vorgesehen und die Rückwand und ein an die Rückwand angrenzender erster Abschnitt des Deckels sind starr oder gelenkig miteinander verbunden, wobei ein schwenkbarer zweiter Abschnitt des Deckels an dem ersten Abschnitt des Deckels angeordnet ist. Die Rückwand und der erste Abschnitt des Deckels können auch einstückig ausgebildet sein.

Der erste Abschnitt des Deckels und die Rückwand bilden im ersten Fall, also wenn sie starr verbunden sind, somit einen Winkel, der bereits prinzipiell eine große Steifigkeit aufweist. Dies ist insbesondere dann von großem Vorteil, wenn die Koppelvorrichtung an der Rückwand angeordnet ist.

In Weiterbildung der Erfindung sind die Seitenwände, der Boden und die Vorderwand im zusammengefalteten Zustand der Box unterhalb des ersten Abschnitts des Deckels angeordnet.

Dadurch sind die Seitenwände, der Boden und die Vorderwand im zusammengefalteten Zustand geschützt unterhalb des ersten Abschnitts des Deckels angeordnet. Die Box kann dadurch auch im zusammengefalteten Zustand problemlos transportiert werden und wiedersteht auch einer rauen Behandlung.

In Weiterbildung der Erfindung ist der erste Abschnitt des Deckels mit wenigstens einem Handgriff versehen.

Der Handgriff befindet sich in dem Fall, in dem der erste Abschnitt des Deckels starr mit der Rückwand verbunden oder einstückig mit dieser ausgebildet ist, dadurch an einem sehr stabilen Teil der Box. en.

In Weiterbildung der Erfindung ist die Koppelvorrichtung werkzeuglos lösbar.

Vorteilhafterweise ist die Koppelvorrichtung abschließbar, um gegebenenfalls die Box an einem Agrarfahrzeug sichern zu können. Die Koppelvorrichtung ist vorteilhafterweise passend zu einer bereits am Agrarfahrzeug vorhandenen Koppelvorrichtung für Geräte ausgebildet, beispielsweise passend zu einem Geräteträger des Agrarfahrzeugs.

In Weiterbildung der Erfindung ist die Koppelvorrichtung zur Verbindung mit einem Schnellkuppeldreieck ausgebildet.

Schnellkuppeldreiecke werden in der Agrartechnik auch als Weiste-Dreieck bezeichnet und erlauben die automatische Aufnahme von Geräten oder eben der faltbaren Box mittels einer Hebeeinrichtung eines Agrarfahrzeuges.

In Weiterbildung der Erfindung bestehen die Rückwand, die Seitenwände, der Boden und der Deckel aus Metall, beispielsweise Edelstahl oder Blech, wobei diese vorzugsweise verzinkt, beschichtet oder lackiert sein können.

Dadurch kann die Box auch dem rauen Einsatz im Agrarbereich über lange Jahre standhalten.

Die Erfindung betrifft auch die Verwendung einer erfindungsgemäßen faltbaren Box an einem Agrarfahrzeug. Die erfindungsgemäße faltbare Box ist in besonderer Weise für die Verwendung an einem Agrarfahrzeug geeignet, da sie eine Aufbewahrungsmöglichkeit bzw. Transportmöglichkeit für Werkzeug, Gerätschaften und dergleichen bereitstellt, im leeren Zustand aber platzsparend zusammengefaltet werden kann und dann, wenn sie nicht benötigt wird, in einfacher Weise vom Agrarfahrzeug gelöst werden kann.

Die Erfindung betrifft auch ein Agrarfahrzeug mit einer erfindungsgemäßen faltbaren Box.

Ein Agrarfahrzeug kann beispielsweise ein Traktor, Unimog oder auch ein Anhänger für diese Fahrzeuge sein.

In Weiterbildung der Erfindung weist das Agrarfahrzeug ein Schnellkuppeldreieck auf und die faltbare Box weist ein zu dem Schellkuppeldreieck passendes Kuppeldreieck auf.

Die faltbare Box kann dadurch mittels des Schnellkuppeldreiecks des Agrarfahrzeuges in einfacher Weise aufgenommen oder abgesetzt werden.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. Einzelmerkmale der unterschiedlichen, dargestellten Ausführungsformen lassen sich dabei in beliebiger Weise miteinander kombinieren, ohne den Rahmen der Erfindung zu überschreiten. In den Zeichnungen zeigen:
- Fig. 1: eine schematische, isometrische Darstellung einer erfindungsgemäßen faltbaren Box gemäß einer ersten Ausführungsform im aufgefalteten Zustand,
- Fig. 2: die Box der Fig. 1 im teilweise zusammengefalteten Zustand,
- Fig. 3: eine erfindungsgemäße faltbare Box gemäß einer zweiten Ausführungsform der Erfindung im vollständig aufgefalteten Zustand,
- Fig. 4: die Box der Fig. 3 im vollständig zusammengefalteten Zustand,
- Fig. 5: die Box der Fig. 4 in einer Seitenansicht,
- Fig. 6: eine Schnittansicht der Box der Fig. 3 mit erst teilweise heruntergeklapptem Boden,
- Fig. 7: eine Rückansicht der Box der Fig. 3,
- Fig. 8: eine schematische Darstellung eines Agrarfahrzeuges mit zwei erfindungsgemäßen Boxen,
- Fig. 9: eine Schnittansicht einer Box gemäß einer dritten Ausführungsform der Erfindung,
- Fig. 10: eine Schnittansicht einer Box gemäß einer vierten Ausführungsform der Erfindung.
- Fig. 11: eine schematische Ansicht einer erfindungsgemäßen Box mit einer ersten Schnellkuppelvorrichtung in schematischer Darstellung und
- Fig. 12: eine erfindungsgemäße Box mit einer weiteren Schnellkuppelvorrichtung in schematischer Darstellung.

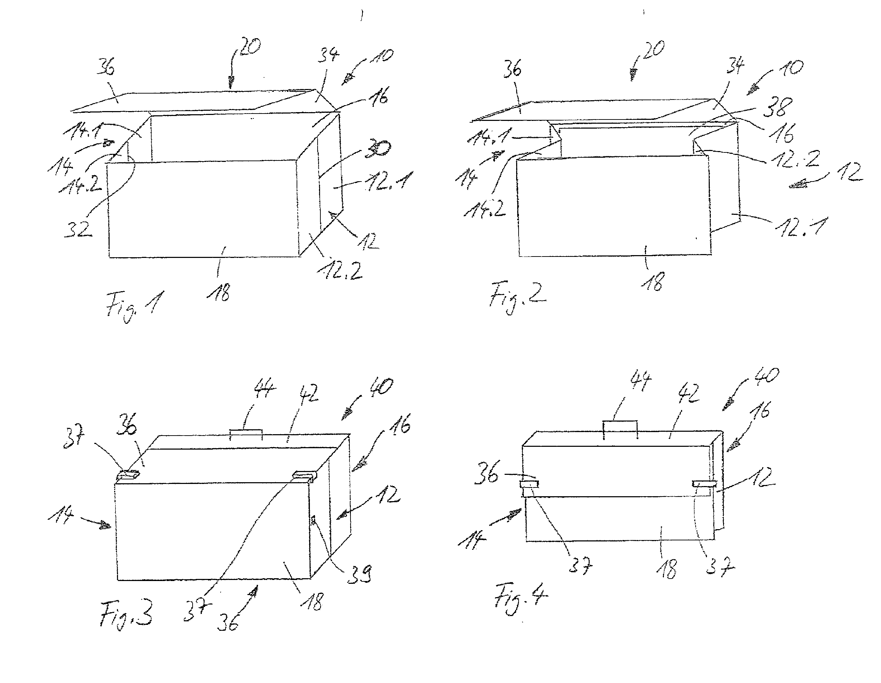

Die Darstellung der Fig. 1 zeigt schematisch eine erfindungsgemäße faltbare Box gemäß einer ersten Ausführungsform. Die faltbare Box weist eine Quaderform auf und hat zwei Seitenwände 12 und 14, eine Rückwand 16, eine Vorderwand 18 und einen Deckel 20. Die Seitenwände 12 und 14 bestehen jeweils aus einer ersten Teilwand 12.1 bzw. 14.1 und einer zweiten Teilwand 12.2 bzw. 14.2. Die jeweiligen ersten Teilwände 12.1, 14.1 und die jeweiligen zweiten Teilwände 12.2, 14.2 sind schwenkbar miteinander verbunden im Bereich einer jeweiligen Scharnierleiste 30 bzw. 32, die in der Fig. 1 aber lediglich schematisch angedeutet sind. Die Rückwand 16 und die Vorderwand 18 sind starr ausgebildet. Ein Boden der faltbaren Box 10 ist in Fig. 1 nicht zu erkennen.

Der Deckel 20 besteht aus einem ersten Abschnitt 34, der schwenkbar an einer Oberkante der Rückwand 16 angelenkt ist, und aus einem zweiten Abschnitt 36, der wiederum schwenkbar an einer Vorderkante des ersten Abschnitts 34 angelenkt ist.

Die ersten Teilwände 12.1, 14.1 sind jeweils schwenkbar an Seitenkanten der Rückwand angelenkt. Die zweiten Teilwände 12.2, 14.2 sind jeweils schwenkbar an Seitenkanten der Vorderwand 18 angelenkt. Der in Fig. 1 nicht erkennbare Boden ist schwenkbar an einer Unterkante der Rückwand 16 angelenkt.

Fig. 1 zeigt die faltbare Box 10 im vollständig aufgefalteten Zustand, allerdings mit teilweise geöffnetem Deckel.

Fig. 2 zeigt die faltbare Box 10 der Fig.1 im teilweise zusammengefalteten Zustand. Der Boden 38 wurde nach oben geklappt, bis er parallel zur Rückwand 16 angeordnet ist. In diesem Zustand können die Teilwände 12.1, 12.2 der in Fig. 2 rechten Seitenwand 12 nach innen eingeklappt werden und in gleicher Weise können die beiden Teilwände 14.1, 14.2 der in Fig. 2 linken Seitenwand 14 von Hand nach innen eingeklappt werden. Zusammen mit dem Einklappen der Seitenwände 12, 14 wird die Vorderwand 18 nach hinten, in Richtung auf die Rückwand zu bewegt. Diese Bewegung wird fortgesetzt, bis die Rückwand 16, der Boden 38, die Teilwände 12.1, 12.2, 14.1, 14.2 und die Vorderwand 18 annähernd parallel zueinander angeordnet sind. In diesem Zustand wird dann der erste Abschnitt 34 des Deckels nach unten geklappt, bis er senkrecht zur Vorderwand 18 angeordnet ist. Die Scharnierachse zwischen dem ersten Abschnitt 34 und dem zweiten Abschnitt 36 des Deckels ragt dann geringfügig über die Oberkante der Vorderwand 18 hinaus, so dass der zweite Abschnitt 36 des Deckels nach unten geklappt werden kann, bis er parallel zur Vorderwand 18 angeordnet ist. Die faltbare Box 10 nimmt in diesem zusammengefalteten Zustand nur wenig Raum ein und der nach unten geklappte zweite Abschnitt 36 des Deckels 20 verhindert, dass die Box 10 auch nur teilweise selbsttätig wieder aufklappt. Geeignete Verschlüsse oder Vorrichtungen können vorgesehen sein, um den Deckel 20 im geschlossenen Zustand und die Box 10 im gefalteten Zustand zu halten, bei entsprechender Auslegung genügt aber in der Regel sogar das Eigengewicht des zweiten Abschnitts 36 des Deckels, um die Box 10 in vollständig zusammengefalteten Zustand zu halten. Es kann ein Schloss vorgesehen sein, um den zweiten Abschnitt 36 des Deckels 20 im gefalteten und im aufgefalteten Zustand der Box an die Vorderwand 18 anzuschließen. Wenn der Deckel 20 verriegelbar oder anschließbar ist, kann am Deckel 20 ein Handgriff zum Tragen der Box angeordnet sein.

In den Fig. 1 und 2 nicht erkennbar ist eine Koppelvorrichtung an der in Fig. 1 nicht sichtbaren und dem Innenraum der Box 10 abgewandten Rückseite der Rückwand 16, mit der die Box 10 lösbar mit einem Agrarfahrzeug verbunden werden kann. Die Koppelvorrichtung wird unter Bezug auf die zweite Ausführungsform in der Fig. 3 bis 7 beschrieben.

Die Darstellung der Fig. 3 zeigt eine schematische isometrische Ansicht einer faltbaren Box 40 gemäß einer weiteren Ausführungsform der Erfindung. Die faltbare Box 40 unterscheidet sich von der faltbaren Box 10 der Fig. 1 und 2 lediglich darin, dass ein erster Abschnitt 42 des Deckels starr mit der in Fig. 1 nicht erkennbaren Rückwand 16 verbunden ist oder sogar einstückig mit der Rückwand 16 ausgeführt ist. Der zweite Abschnitt 36 des Deckels ist dahingegen wie bei der Box 10 schwenkbar mit dem ersten Abschnitt 42 des Deckels verbunden. Mittig auf dem ersten Abschnitt 42 des Deckels ist ein Handgriff 44 angeordnet. Die Seitenwände 12, 14, der Boden 36 und die Vorderwand 18 sind in gleicher Weise wie der bei der Box 10 der Fig. 1 und 2 ausgebildet und werden daher nicht erneut beschrieben. Verriegelungshebel 37 mit passenden Haken an den Seitenwänden 12, 14 halten den Deckelabschnitt 36 im geschlossenen Zustand. Passende Haken 39 sind auch an der Vorderkante der Seitenwände 12, 14 angeordnet, um den Deckelabschnitt 36 an der Vorderwand 18 und damit die Box im gefalteten Zustand zu halten, siehe Fig. 4.

Fig. 4 zeigt die Box 40 der Fig. 3 im vollständig zusammengefalteten Zustand. Der erste Abschnitt 42 des Deckels und die Rückwand 16 ändern beim Zusammenfalten der Box ihre Position zueinander nicht, da sie ja starr miteinander verbunden oder einstückig ausgeführt sind. Beispielsweise kann die Rückwand 16 und der erste Abschnitt 42 des Deckels aus einem Edelstahlblech, das abgekantet wird, hergestellt werden. Die Seitenwände 12 und 14 sind nun eingeklappt, der Boden 36 ist nach oben geklappt und parallel zur Rückwand 16 angeordnet. Die Vorderwand 18 ist in Richtung auf die Rückwand 16 geschoben worden, so dass im Zustand der Fig. 4 nun die Rückwand 16, der Boden 36, die Teilwände 22, 26 der Seitenwand 12, die Teilwände 24, 28 der Seitenwand 14 und die Vorderwand 18 annähernd parallel zueinander angeordnet sind. Der zweite Deckelabschnitt 36 wird vor die Vorderwand 18 geklappt und hält die Box 40 bereits durch sein Eigengewicht im vollständig zusammengefalteten Zustand. In diesem Zustand kann die Box 40 an dem Handgriff 44 ergriffen und transportiert werden. Eine Verriegelung des Deckels 20 ist zum Tragen der Box am Handgriff 44 nicht erforderlich.

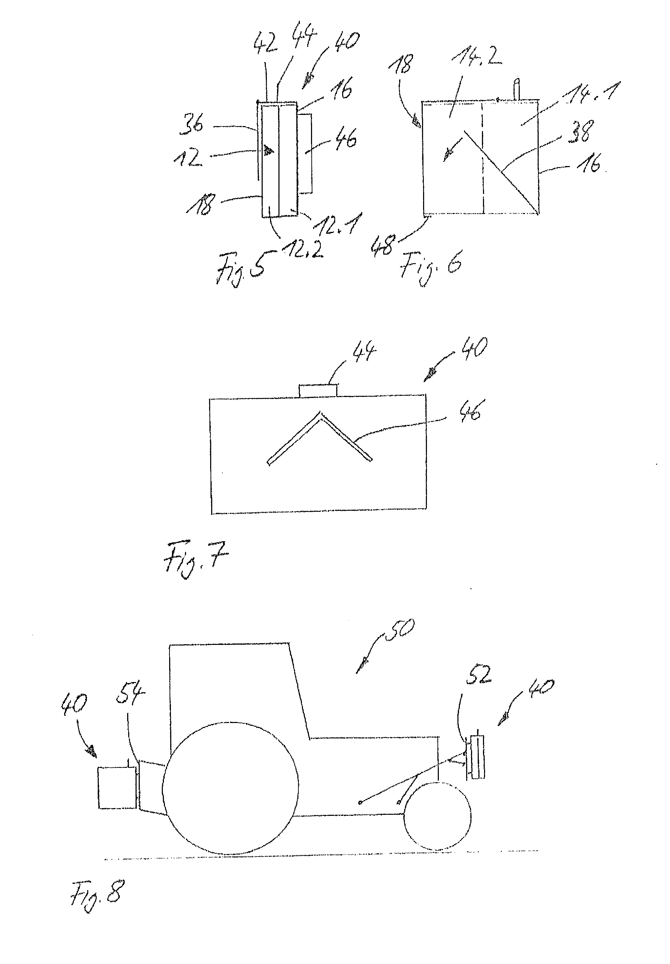

Die Darstellung der Fig. 5 zeigt die Box 40 in einer Seitenansicht. Wie ausgeführt wurde, sind der erste Abschnitt 42 des Deckels und die Rückwand 16 aus einem gekanteten Edelstahlblech einstückig hergestellt. Der zweite Abschnitt 36 des Deckels, die Vorderwand 18, die Teilwände 22, 26 der Seitenwand 12 und der in Fig. 5 nicht erkennbare Boden befinden sich in einer annähernd parallelen Stellung. In dieser Stellung werden die Vorderwand 18, die eingeklappten Seitenwände 12, 14 und der Boden 16 durch den ersten Abschnitt 42 des Deckels geschützt. Es ist Fig. 5 ohne weiteres zu entnehmen, dass der Raumbedarf der vollständig zusammengefalteten Box 40 nur sehr gering ist. Dies gilt auch für die Box 10 der Fig. 1 und 2.

An der Rückwand 16 ist eine Koppelvorrichtung 46 angeordnet, die zum lösbaren Verbinden mit einem Agrarfahrzeug dient und die anhand der Fig. 7 noch genauer beschrieben wird.

Fig.6 zeigt eine Schnittansicht der vollständig aufgefalteten Box 40 der Fig. 3. Der Boden 36 ist in einer Winkelstellung von etwa 45 Grad zur Rückwand 16 und zu seiner Endposition dargestellt. Die Fig. 6 dient zur Verdeutlichung, wie der Boden 36 ausgehend von seiner parallelen Stellung zur Rückwand 16 nach unten geklappt wird, bis er an einem Absatz 48 an der Unterkante der Vorderwand 18 anschlägt, wobei sich der Absatz 48 von der Vorderwand 18 in Richtung auf die Rückwand 16 erstreckt. Der Absatz 48 definiert eine Endposition des Bodens 36. Der Boden 36 hält in seiner senkrecht zur Rückwand 16 und der Vorderwand 18 angeordneten Position somit die Vorderwand 18 und die Rückwand 16 auf Abstand zueinander und sorgt gleichzeitig dafür, dass die Teilwände 24, 28 der Seitenwand 14 und die in Fig. 6 nicht erkennbaren Teilwände 22, 26 der Seitenwand 12 parallel zueinander und damit im vollständig aufgefalteten Zustand gehalten werden. Dies gilt auch für die Box 10 der Fig. 1 und 2.

Die Darstellung der Fig. 7 zeigt die Box 40 der Fig. 3 von hinten, wobei die Beschreibung der Koppelvorrichtung auch für die Box 10 der Fig. 1 und 2 gilt. Zu erkennen ist die Koppelvorrichtung 46 in Form zweier, im Winkel zueinander angeordneter U-Profile. Die Koppelvorrichtung 46 ist dadurch für die Verbindung mit einem Schnellkuppeldreieck eines Agrarfahrzeuges geeignet. Ein Schnellkuppeldreieck besteht aus einer dreieckförmigen Anordnung zweier Träger, die dann von unten her in die U-Profile der Koppelvorrichtung 46 eingefahren werden und dadurch die Box 40 sicher ankoppeln. Die Box 40 ist dadurch nicht nur in Höhenrichtung sondern auch in Seitenrichtung sicher an dem Schnellkuppeldreieck fixiert. Ein solches Schnellkuppeldreieck wird auch als Weiste-Dreieck bezeichnet.

Die Darstellung der Fig. 8 zeigt schematisch ein Agrarfahrzeug 50, das einen vorderen Geräteträger 52 und einen hinteren Geräteträger 54 aufweist. Die Geräteträger 52, 54 sind an jeweils lediglich schematisch angedeuteten Hebevorrichtungen angeordnet. Die Geräteträger 52, 54 sind jeweils mit einem Schnellkuppeldreieck versehen. Sowohl an dem vorderen Geräteträger 52 als auch an dem hinteren Geräteträger 54 ist jeweils eine erfindungsgemäße Box 40 befestigt. Die Befestigungen der Boxen 40 an dem jeweiligen Geräteträger 52, 54 erfolgt, wie dies beschrieben wurde, mittels der Koppelvorrichtung 46. Die am vorderen Geräteträger 52 befestigte Box ist im vollständig zusammengefalteten Zustand dargestellt. Es ist zu erkennen, dass die Box 40 dadurch nur einen geringen Raumbedarf hat. Die Box 40 am hinteren Geräteträger 54 ist dahingehend vollständig aufgefaltet und stellt einen Transportraum für Werkzeug und dergleichen zur Verfügung.

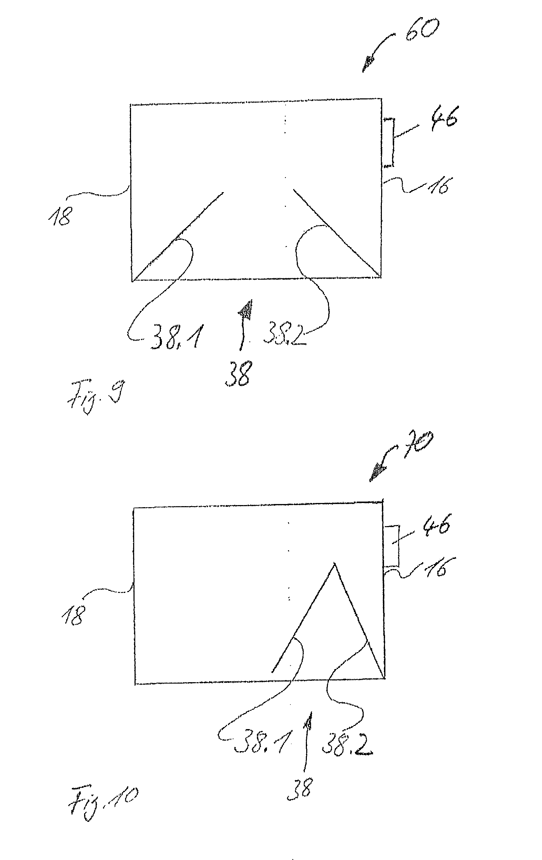

Fig. 9 zeigt eine schematische Schnittansicht einer Box 60 gemäß einer weiteren Ausführungsform. An der Rückwand 16 ist die Schnellkuppelvorrichtung 46 zu erkennen. Der Boden 38 ist zweiteilig ausgeführt und besteht aus einem ersten Abschnitt 38.1, der an einer Unterkante der Vorderwand 18 schwenkbar angelenkt ist, sowie aus einem zweiten Abschnitt 38.2, der schwenkbar an einer Unterkante der Rückwand 16 angelenkt ist. In Fig. 9 ist der Boden 38 im teilweise eingeklappten Zustand dargestellt. Ausgehend vom Zustand der Fig. 9 werden die beiden Abschnitte 38.1 und 38.2 nach unten geklappt, bis beide Abschnitte 38.1 und 38.2 senkrecht zur Rückwand 16 und zur Vorderwand 18 angeordnet sind.

Die Darstellung der Fig. 10 zeigt eine schematische Schnittansicht einer weiteren erfindungsgemäßen Box 70 mit Schnellkuppelvorrichtung 46 an der Rückwand 16. Der Boden 38 ist wieder zweiteilig ausgeführt, wobei ein zweiter Bodenabschnitt 38.2 schwenkbar an einer Unterkante der Rückwand 16 angelenkt ist und ein erster Bodenabschnitt 38.1 schwenkbar an einer Vorderkante des zweiten Bodenabschnitts 38.2 angelenkt ist. Ausgehend vom teilweise zusammengefalteten Zustand der Fig. 10 werden die beiden Bodenabschnitte 38.1 und 38.2 nach unten bewegt, bis sie senkrecht zur Rückwand 16 und zur Vorderwand 18 angeordnet sind.

Die Aufteilung des Bodens 38 in zwei oder mehr Abschnitte, wie dies bei den Boxen 60, 70 der Fig. 9 und 10 realisiert wurde, erlaubt es, die Tiefe der Boxen 60, 70, also der Abstand zwischen der Rückwand 16 und der Vorderwand 18, größer zu wählen als die Höhe der Box, also jeweils die Höhe der Rückwand 16 bzw. der Vorderwand 18.

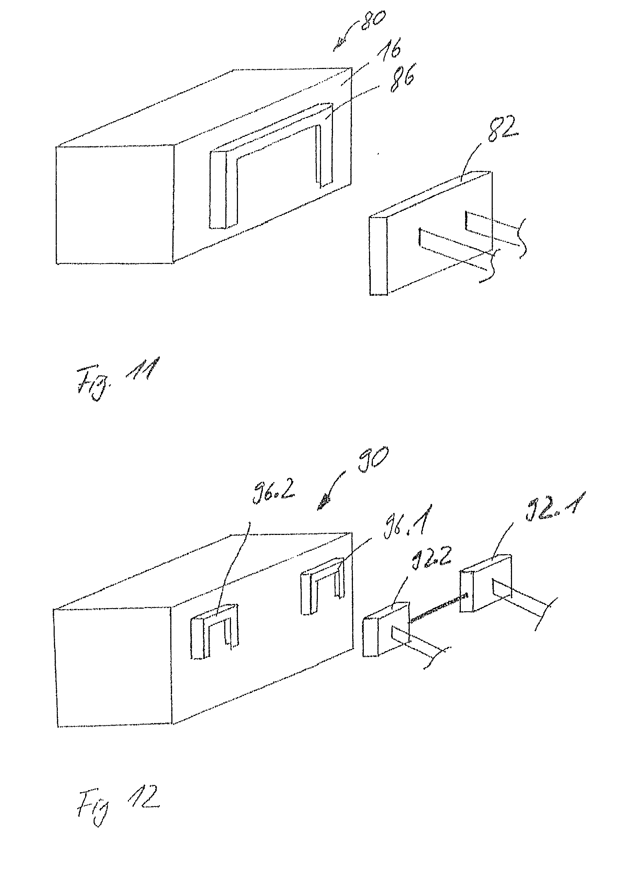

Die Darstellung der Fig. 11 zeigt schematisch eine weitere erfindungsgemäße Box 80 mit einer Schnellkuppelvorrichtung 86 an der Rückwand 16, wobei die Schnellkuppelvorrichtung 86 die Form eines U aufweist. Dieses U ist aus insgesamt drei Profilabschnitten mit jeweils L- oder U-förmigem Querschnitt aufgebaut, so dass ein passendes Gegenstück 82, von unten her in die Schnellkuppelvorrichtung 86 eingefahren werden kann. Die Box 80 ist dann zuverlässig mit dem Gegenstück 82 verbunden, das wiederum mit einer Hebevorrichtung an einem Agrarfahrzeug verbunden sein kann, was in Fig. 11 lediglich schematisch angedeutet ist.

Fig. 12 zeigt eine weitere erfindungsgemäße Box 90 mit einer zweiteiligen Schnellkuppelvorrichtung 96.1 und 96.2. Beide Abschnitte 96.1 und 96.2 der Schnellkuppelvorrichtung sind jeweils in Form eines U ausgebildet. In jeden der Abschnitte 96.1, 96.2 kann ein passendes Gegenstück 92.1 bzw. 92.2 von unten her eingefahren werden, um die Gegenstücke 92.1 und 92.2 sicher mit der Box 90 zu verbinden. Die Gegenstücke 92.1 und 92.2 können wiederum mit der Hubvorrichtung eines Agrarfahrzeugs verbunden sein, die lediglich schematisch angedeutet ist.

## Patentansprüche

1. Faltbare Box mit einem Boden (36), zwei Seitenwänden (12, 14), einer Rückwand (16) und einer Vorderwand (18), **dadurch gekennzeichnet, dass** die Rückwand (16) eine Koppelvorrichtung (46) zum lösbaren Verbinden mit einem Agrarfahrzeug (50) aufweist und dass der Boden (36), die Seitenwände (12, 14) und die Vorderwand (18) im an das Agrarfahrzeug (50) angekoppelten Zustand einklappbar und aufklappbar sind.

2. Faltbare Box nach Anspruch 1, **dadurch gekennzeichnet, dass** die Rückwand (16) und die Vorderwand (18) starr ausgebildet sind..

3. Faltbare Box nach Anspruch 2, **dadurch gekennzeichnet, dass** die beiden Seitenwände (12, 14) jeweils mindestens aus einer ersten und einer zweiten Teilwand ( 12.1, 12.2, 14.1, 14.2) bestehen, wobei die beiden Teilwände (12.1, 12.2, 14.1, 14.2) gleich groß sind und um eine zur Rückwand (16) parallele Achse schwenkbar aneinander angelenkt sind, wobei die erste Teilwand (12.1, 14.1) schwenkbar an der Rückwand (16) angelenkt ist und wobei die zweite Teilwand (12.2, 14.2) schwenkbar an der Vorderwand (18) angelenkt ist.

4. Faltbare Box nach Anspruch 2oder 3, **dadurch gekennzeichnet, dass** der Boden (36) starr ausgebildet ist und schwenkbar mit der Rückwand (16) oder der Vorderwand (18) verbunden ist.

5. Faltbare Box nach wenigstens einem der vorstehenden Ansprüche, **dadurch gekennzeichnet, dass** ein Deckel (20) vorgesehen ist und dass die Rückwand (16) und ein an die Rückwand (16) angrenzender erster Abschnitt (42) des Deckels starr oder gelenkig miteinander verbunden sind, wobei ein schwenkbarer zweiter Abschnitt (36) des Deckels an dem ersten Abschnitt (42) des Deckels schwenkbar angelenkt ist.

6. Faltbare Box nach Anspruch 6, **dadurch gekennzeichnet, dass** die Seitenwände (12, 14), der Boden (36) und die Vorderwand (18) im zusammengefalteten Zustand der Box (40) unterhalb des ersten Abschnitts (42) des Deckels angeordnet sind.

7. Faltbare Box nach Anspruch 6 oder 7, **dadurch gekennzeichnet, dass** der erste Abschnitt (42) des Deckels mit wenigstens einem Handgriff (44) versehen ist.

8. Faltbare Box nach wenigstens einem der vorstehenden Ansprüche, **dadurch gekennzeichnet, dass** die Koppelvorrichtung (46) werkzeuglos lösbar ist.

9. Faltbare Box nach wenigstens einem der vorstehenden Ansprüche, **dadurch gekennzeichnet, dass** die Koppelvorrichtung (46) zur Verbindung mit einem Schnellkuppeldreieck (Weiste-Dreieck) ausgebildet ist.

10. Faltbare Box nach wenigstens einem der vorstehenden Ansprüche, **dadurch gekennzeichnet, dass** die Rückwand (16), die Vorderwand (18), die Seitenwände (12, 14), der Boden (36) und/oder der Deckel (20) aus Edelstahl bestehen.

11. Verwendung einer faltbaren Box (10; 40) nach wenigstens einem der vorstehenden Ansprüche an einem Agrarfahrzeug (50).

12. Agrarfahrzeug (50) mit einer faltbaren Box (10; 40) nach einem der vorstehenden Ansprüche.

13. Agrarfahrzeug nach Anspruch 12, **dadurch gekennzeichnet, dass** das Agrarfahrzeug (50) ein Schnellkuppeldreieck aufweist und die faltbare Box (10; 40) ein mit dem Schnellkuppelreieck verbindbares Kuppeldreieck (46) aufweist.
